(19) Europäisches Patentamt / European Patent Office / Office européen des brevets

(11) **EP 2 857 358 A1**

(12) **EUROPEAN PATENT APPLICATION**
published in accordance with Art. 153(4) EPC

(43) Date of publication:
08.04.2015 Bulletin 2015/15

(51) Int Cl.:
*C02F 1/44* (2006.01)          *B01D 61/36* (2006.01)
*B01D 63/14* (2006.01)

(21) Application number: 12878011.1

(22) Date of filing: 30.05.2012

(86) International application number:
PCT/JP2012/063947

(87) International publication number:
WO 2013/179414 (05.12.2013 Gazette 2013/49)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Asahi Kasei Chemicals Corporation
Tokyo 101-8101 (JP)

(72) Inventors:
• SHIMIZU Atsushi
  Tokyo 101-8101 (JP)

• OHNO Hirokazu
  Tokyo 101-8101 (JP)
• NIIHAMA Tomohiro
  Tokyo 101-8101 (JP)

(74) Representative: McConchie, Connor Fraser
D Young & Co LLP
120 Holborn
London EC1N 2DY (GB)

(54) **METHOD AND DEVICE FOR OBTAINING PURIFIED WATER**

(57)    A main object is to provide a method, a membrane module and a purified water manufacturing device that demonstrate a performance of manufacturing water stably for a long period of time and lower a salt concentration in purified water. In the method, raw water is made to flow along one surface of a gas-permeable membrane, vapor permeated through the gas-permeable membrane is condensed, and the purified water is obtained.

*Fig.1*

## Description

### Technical Field

The present invention relates to a method for obtaining water with few impurities (called purified water, hereinafter) from water that contains impurities such as seawater or wastewater (may contain electrolytes such as organic salt/inorganic salt, other dissolved components, dispersions or microorganisms in particular) (called raw water, hereinafter), a membrane module, and a purified water manufacturing device. More in detail, the present invention relates to a method for subjecting raw water to membrane distillation using a gas-permeable membrane and manufacturing water, a membrane module, and a purified water manufacturing device.

### Background Art

Conventionally, as a method for obtaining the purified water from the raw water, a reverse osmosis membrane method, a distillation method and a membrane distillation method are known.
The reverse osmosis membrane method is a method for obtaining the purified water by treating salt water by a reverse osmosis membrane at a high pressure.
Although this method is widely used, the problem is in the fact that a high pressure pump is needed and devices in many stages are needed in order to sufficiently lower a salt concentration in the purified water are problems.
The distillation method is a method of manufacturing water by heating the raw water and condensing evaporated vapor. The distillation method has disadvantages in that it is difficult to obtain the water below a boiling point, a device is large-sized, and the like.
The membrane distillation method is a method for taking out the vapor from the raw water using a membrane, and recovering it as the water. The membrane distillation method has an advantage in that the purified water of a low salt concentration is easily obtained. The membrane distillation method does not need the high pressure pump, is capable of utilizing solar heat energy or waste heat of various kinds of devices/facilities, and is attracting attention in recent years as an energy-saving type method.
As a specific example of the membrane distillation method, Patent Literature 1 describes the membrane distillation method using a hydrophobic porous membrane, and Patent Literature 2 describes the membrane distillation method using a semipermeable membrane.

### Citation List

#### Patent Literature

Patent Literature 1: Japanese Patent Application Laid-Open Publication No. Hei 9-1143
Patent Literature 2: Japanese Patent Application Laid-Open Publication No. 2010-162527

### Summary of Invention

### Technical Problem

In a method of using a hydrophobic porous membrane described in Patent Literature 1, water which is liquid is not permeated into pores of the membrane and only vapor which is a gas is permeated. Thus, by collecting and cooling only the permeated gas, purified water is obtained. However, in the case of being used in purification of seawater, for instance, when a membrane surface and the inside of the pores are contaminated by microorganisms, other dispersions, dissolved organic matters, or the like that are contained in the seawater, the surface of the membrane and the inside of the pores are blocked. Also, when the surface of the membrane and the inside of the pores are hydrophilized by the contamination, the water which is liquid is permeated, and a problem that the seawater is permeated through the membrane, a salt concentration in the purified water rises, or the like is anticipated.
A method for using a semipermeable membrane described in Patent Literature 2 is a method for performing membrane distillation by using a function that liquid water molecules are permeated in the membrane, however, a device is complicated in that a mediating solution which absorbs the water is needed or the like. Also, in the case of being used in the purification of the seawater, the membrane surface and the inside of the pores are contaminated by the microorganisms, the other dispersions, the dissolved organic matters, or the like that are contained in the seawater, and there is a risk that a membrane performance changes with time.

In the present invention, a main object is to provide a method, a membrane module and a purified water manufacturing device that solve the problems of the conventional methods, demonstrate a performance of manufacturing the water stably for a long period of time, and moreover, lower the salt concentration in the purified water.

**Solution to Problem**

As a result of intensive studies to solve the problems, the present inventor has found that, when water is distilled through a gas-permeable membrane, a concentration of impurities in the resultant water can be maintained to be low over a long period of time and a method, a membrane module and a purified water manufacturing device with high durability against various contaminations can be provided, and completed the present invention.

That is, the present invention is as follows.

(1) A method that makes raw water flow along one surface of a gas-permeable membrane, condenses vapor permeated through the gas-permeable membrane, and obtains purified water.

(2) The method according to the (1), wherein air is made to flow along another surface of the gas-permeable membrane.

(3) The method according to the (1) or (2), wherein the vapor is condensed by cooling.

(4) The method according to any one of the (1) to (3), wherein a vapor permeation rate of the gas-permeable membrane is equal to or higher than 10 GPU and is equal to or lower than 1000000 GPU.

(5) The method according to any one of the (1) to (4), wherein the raw water is seawater.

(6) The method according to any one of the (1) to (5), wherein a temperature of the raw water is equal to or higher than 1°C and is equal to or lower than 100°C.

(7) The method according to any one of the (1) to (6), wherein in a membrane module, a flowing direction of the raw water and a flowing direction of a cooling medium are opposite, the membrane module comprising the gas-permeable membrane, a cooling membrane, and a case that houses the gas-permeable membrane and the cooling membrane, wherein a first space formed by the gas-permeable membrane and the case, a second space formed by the gas-permeable membrane and the cooling membrane, and a third space formed by the cooling membrane and the case are provided inside the case, the first space has at least a raw water supply port that supplies the raw water to the first space, and a raw water discharge port that discharges the raw water from the first space, the second space has at least one or more openings, and the third space has at least a cooling medium supply port that supplies the cooling medium to the third space, and a cooling medium discharge port that discharges the cooling medium from the third space.

(8) A membrane module comprising a gas-permeable membrane and a cooling membrane, wherein raw water flows along one surface of the gas-permeable membrane.

(9) The membrane module according to the (7), wherein a cooling medium flows along one surface of the cooling membrane.

(10) The membrane module according to the (8) or (9), wherein a flowing direction of the raw water and a flowing direction of the cooling medium are opposite.

(11) A membrane module further comprising a case that houses a gas-permeable membrane and a cooling membrane, wherein a first space formed by the gas-permeable membrane and the case, a second space formed by the gas-permeable membrane and the cooling membrane, and a third space formed by the cooling membrane and the case are provided inside the case, the first space has at least a raw water supply port that supplies raw water to the first space, and a raw water discharge port that discharges the raw water from the first space, the second space has at least one or more openings, and the third space has at least a cooling medium supply port that supplies the cooling medium to the third space, and a cooling medium discharge port that discharges the cooling medium from the third space.

(12) The membrane module according to the (8), wherein the second space has two or more of the openings.

(13) The membrane module according to the (8) or (9), comprising a spacer between the gas-permeable membrane and the cooling membrane.

(14) The membrane module according to any one of the (8) to (10), wherein the gas-permeable membrane and the cooling membrane are in a flat membrane pleated shape.

(15) The membrane module according to any one of the (8) to (11), wherein the raw water supply port, the raw water discharge port, the cooling medium supply port, and the cooling medium discharge port are arranged so that a direction of the raw water flowing through the first space and a direction of the cooling medium flowing through the third space are opposite.

(16) The membrane module according to any one of the (8) to (12), comprising a plurality of the gas-permeable membranes and the cooling membranes, wherein the first space is formed between the gas-permeable membranes adjacent to each other, the second space is formed between the gas-permeable membrane and the cooling membrane that are adjacent, the third space is formed between the cooling membranes adjacent to each other, and stacking is repeatedly performed in the order of the first space, the second space, the third space, and the second space.

(17) A purified water manufacturing device, comprising the membrane module according to any one of the (8) to (13), a raw water supplier, and a cooling medium supplier, wherein the raw water supply port of the first space is connected to the raw water supplier, and the cooling medium supply port of the third space is connected to the cooling medium supplier.

(18) The purified water manufacturing device according to the (17), wherein vapor condensing means is connected to the openings of the second space.

(19) A purified water manufacturing device comprising a membrane module including a gas-permeable membrane, and a case that houses the gas-permeable membrane, and vapor condensing means, wherein the membrane module is the membrane module that, inside the case, has a first space formed by the gas-permeable membrane and the case, and a fourth space formed by the gas-permeable membrane and the case, the first space has at least a raw water supply port that supplies raw water to the first space, and a raw water discharge port that discharges the raw water from the first space, and the fourth space has at least one or more openings, and the vapor condensing means is connected to the opening of the fourth space.

(20) The purified water manufacturing device according to the (18) or (19), wherein the vapor condensing means is a heat exchanger or a cooler.

(21) The purified water manufacturing device according to any one of the (17) to (20), further comprising a temperature control unit that controls a temperature of the raw water, and a flow rate control unit that controls a flow rate of the raw water.

**Advantageous Effects of Invention**

According to the method of the present invention, the purified water can be manufactured stably for a long period of time, and the purified water of low impurity concentration can be manufactured. In addition, according to the membrane module and the purified water manufacturing device of the present invention, the membrane module for manufacturing the purified water and the purified water manufacturing device that are high in durability, and are capable of stably manufacturing the purified water of the low impurity concentration and being easily operated can be provided.

**Brief Description of Drawings**

[Figure 1] Figure 1 is a conceptual diagram of a purified water manufacturing device including one embodiment of a membrane module.
[Figure 2] Figure 2 is a conceptual diagram of one embodiment of the membrane module.
[Figure 3] Figure 3 is a conceptual diagram illustrating one example of a pleated molding incorporated in the membrane module.
[Figure 4] Figure 4 is a conceptual diagram of one embodiment of a pleated type membrane module.
[Figure 5] Figure 5 is a conceptual diagram of one embodiment of the pleated type membrane module illustrated in Figure 4.
[Figure 6] Figure 6 is a conceptual diagram of another embodiment of the membrane module.
[Figure 7] Figure 7 is a conceptual diagram of another embodiment of the membrane module.
[Figure 8] Figure 8 is a conceptual diagram of one embodiment of a hollow fiber type membrane module.
[Figure 9] Figure 9 is a conceptual diagram of one embodiment of the purified water manufacturing device.
[Figure 10] Figure 10 is a conceptual diagram of one embodiment of the hollow fiber type membrane module.

**Description of Embodiments**

Hereinafter, a mode for implementing the present invention (simply called "the present embodiment", hereinafter) will be described in detail while preferring to the drawings as needed. The present embodiment below is an example for describing the present invention and is not intended to limit the present invention to the following contents. Also, the attached drawings illustrate one example of the embodiment and it should not be interpreted as being limited thereto. The present invention can be appropriately modified and implemented within a scope of the gist. Also, in the drawings, it is assumed that positional relationship of being vertical or horizontal or the like is based on the positional relationship illustrated in the drawings unless informed in particular, and a dimension ratio of the drawings is not limited to the illustrated ratio.

A method of the present embodiment is the method of making raw water flow along one surface of a gas-permeable membrane, condensing vapor permeated through the gas-permeable membrane, and obtaining purified water.

[Raw water, purified water]

The raw water in the present embodiment is water containing impurities, and is the water that may contain electrolytes such as organic salt/inorganic salt, other dissolved components, dispersions or microorganisms in particular. As the raw water, though not limited in particular, there are seawater, river water, industrial waste water, domestic waste water, or the like. As the raw water, the seawater is suitable.

The purified water in the present embodiment is the water for which the raw water is treated, and is the water for which vapor permeated through the gas-permeable membrane is condensed. The purified water is the water in which concentrations of the impurities are low, and as the impurities, there are electrolytes such as organic salt/inorganic salt, other dissolved components, dispersions or microorganisms, or the like. When the seawater is used as the raw water, it is preferable that a salt concentration is low as the purified water.

[Gas-permeable membrane]

The gas-permeable membrane in the present embodiment is a membrane having a mechanism that a gas such as the vapor is permeated by being dissolved/diffused in a material forming the membrane. By using the gas-permeable membrane, liquid water and dissolved components such as salts or non-salts, the dispersions, the microorganisms, and the like in the raw water are not permeated through the gas-permeable membrane, the vapor is dissolved/diffused in the membrane and permeated, and thus the water with extremely few impurities can be obtained. In addition, the gas-permeable membrane in the present embodiment is a membrane practically without a through-hole, and contamination of the inside of the membrane by the impurities can be suppressed.

Here, in the present embodiment, the fact that there is practically no through-hole means that there is practically no macro through-hole or micro through-hole indicating a Knudsen flow and a gas dissolving and diffusing mechanism is dominant for gas permeation of the membrane. When it is expressed by a ratio of an oxygen permeation rate to a nitrogen permeation rate, it means that an oxygen permeation rate/the nitrogen permeation rate ratio exceeds 1. The nitrogen (oxygen) permeation rate is a value for which a permeation amount per unit time of nitrogen (or oxygen) is converted to be per unit area/unit pressure (for instance, GPU = $10^{-6}$ cm$^3$ (STP)/cm$^2$/s/cmHg).

A conventional method using a hydrophobic microporous membrane utilizes the fact that a gas physically passes through a gap (several nm or larger) which is extremely large compared to a molecule to be a material of the membrane, and the gas permeation of the present invention is different from the conventional method in principle. That is, the method using the hydrophobic microporous membrane described in Patent Literature 1 is a method for obtaining the water from the raw water by physical permeation of the vapor through the gap in micropores, however, the method of the present embodiment is a method of obtaining the water from the raw water by dissolution/diffusion of the vapor through the gas-permeable membrane. Therefore, according to the method of the present embodiment, since the gas-permeable membrane does not practically have the pores, the contamination of the membrane by the impurities contained in the raw water can be suppressed.

[Gas permeation performance of gas-permeable membrane]

For vapor permeation through the gas-permeable membrane in the present embodiment, a partial pressure difference of the vapor on a raw water side of the membrane and the opposite side becomes driving power. The vapor permeation rate is indicated by the following equation, and depends on ΔP which is a differential pressure of the vapor on the raw water side and the opposite side, and S which is a membrane area.

$$F\ [10^{-6}\text{L cm}^3\ (\text{STP})\ \text{s}^{-1}] = J\ [\text{GPU}] \times \Delta P\ [\text{cmHg}] \times S\ [\text{cm}^2]$$

In the equation, J GPU ($10^{-6}$ cm$^3$ (STP)/cm$^2$/s/cmHg)] is called a gas permeation rate, and is an index indicating a gas permeation performance of the gas-permeable membrane. The vapor permeation rate of the gas-permeable membrane of the present embodiment is preferably 10 to 1000000 GPU, more preferably 100 to 1000000 GPU, more preferably 1000 to 1000000 GPU, and further preferably 5000 to 1000000 GPU. A vapor permeation rate/nitrogen permeation rate ratio is preferably 5 or greater, and more preferably 10 or greater. Also, it is normally 1000000 or below.

[Material of gas-permeable membrane]

As the gas-permeable membrane in the present embodiment, there are an organic gas-permeable membrane and an inorganic gas-permeable membrane, and an organic polymer gas-permeable membrane is preferable.

As the organic polymer gas-permeable membrane, there are the gas-permeable membranes using a hydrophobic polymer or a hydrophilic polymer, and the gas-permeable membrane using the hydrophobic polymer is more preferable. The hydrophobic gas-permeable membrane does not practically contain the liquid water and does not permeate the liquid water. Therefore, the contamination of the inside of the membrane by the electrolytes such as the organic salt/inorganic salt, the other dissolved components, the dispersions, and the like contained in the water is little, and durability is improved. In the present embodiment, the hydrophobic polymer is the one whose water absorption rate is 0.5 mass% or lower. The water absorption rate is preferably 0.1 mass% or lower, more preferably 0.05 mass% or lower, and further preferably 0.01 mass% or lower. Also, the similar water absorption rate is preferable in the case of a hydrophobic inorganic material. As a measuring method of the water absorption rate, measurement can be performed under conditions that a sample is immersed in the water at 23°C for 24 hours according to ASTM D570.

As the hydrophobic polymer gas-permeable membrane, for instance, there are a fluororesin-based gas-permeable membrane, a polyimide-based gas-permeable membrane, a silicon-based gas-permeable membrane, a PIM (Polymers of intrinsic microporosity) gas-permeable membrane, and the like. Among them, from the viewpoint that a rate at which the vapor is permeated is high, the fluororesin-based gas-permeable membrane, the polyimide-based gas-permeable membrane, and the PIM gas-permeable membrane are further preferable, and the fluororesin-based gas-permeable membrane and the PIM gas-permeable membrane are particularly preferable.

[Fluororesin-based gas-permeable membrane]

As the fluororesin-based gas-permeable membrane, the one using an amorphous fluorine-containing polymer is preferable.

As the amorphous fluorine-containing polymer, for instance, there is a polymer having a fluorine-containing alicyclic structure or the like.

Examples of a monomer for obtaining the polymer having the fluorine-containing alicyclic structure include a monomer having the fluorine-containing alicyclic structure such as perfluoro(2,2-dimethyl-1,3-dioxole) (PDD), perfluoro(2-methyl-1,3-dioxole), perfluoro(2-ethyl-2-propyl-1,3-dioxole), perfluoro(2,2-dimethyl-4-methyl-1,3-dioxole), perfluorodioxoles, perfluorodioxole compounds having a fluorine-substituted alkyl group such as a trifluoromethyl group, a pentafluoroethyl group, a heptafluoropropyl group, or the like, perfluoro(4-methyl-2-methylene-1,3-dioxolane) (MMD), perfluoro(2-methyl-1,4-dioxin), or the like.

Other monomers forming a copolymer with the monomer are tetrafluoroethylene, chlorotrifluoroethylene, perfluoro(methyl vinyl ether), or the like. The polymer having the fluorine-containing alicyclic structure can be used for a main chain as well. These monomers are polymerized alone or in combinations and a fluorine-based polymer compound to be used as the gas-permeable membrane is obtained.

Commercial products may be also used, and they are, for instance, a trade name "Teflon(R) AF" (made by DuPont), a trade name "HYFLON AD" (made by Ausimont), or the like. Examples of Teflon(R)AF include Teflon(R) AF 1600 and Teflon(R) AF 2400.

Also, a water contact angle of a surface of the gas-permeable membrane is preferably 90° or larger, more preferably 95° or larger, and further preferably 100° or larger.

As a material of the inorganic gas-permeable membrane, there are the gas-permeable membranes of a silicon nitride base or a carbon base or the like.

[Support layer of gas-permeable membrane]

The gas-permeable membrane in the present embodiment preferably has a support layer. When the gas-permeable membrane is thinner, the gas permeation rate improves, however, mechanical strength of the membrane declines. Therefore, by providing the gas-permeable membrane with a support layer, the mechanical strength of the membrane improves and it is preferable.

A material of the support layer is not limited in particular as long as the membrane can permeate a gas, and various ones are usable. For instance, woven fabric, non-woven fabric, a microporous membrane, and the like are usable. As the microporous membrane used for the support layer, there are a polyimide microporous membrane, a PVDF microporous membrane, a PTFE microporous membrane, a polyolefin microporous membrane, a polysulfone microporous membrane used as an ultrafiltration membrane (UF membrane), a polyethersulfone microporous membrane, and the like. Among them, the polyolefin microporous membrane and the ultrafiltration membrane (UF membrane) are preferable in that they can be industrially easily obtained.

When a shape of the membrane is a flat membrane, an example is a form that the gas-permeable membrane is formed on the support layer. In the case of a hollow fiber membrane, an example is a form that the gas-permeable membrane is formed on a surface on an inner side or a surface on an outer side of the hollow fiber membrane. Forming the gas-permeable membrane by coating is a generally easy method and is preferable.

Another example of the membrane having the support layer is a membrane in a asymmetric structure formed by a wet process so as to form a skin layer having the gas permeation performance on a membrane surface. An example of the membrane in this form is a polyimide hollow fiber. In the case of the inorganic gas-permeable membrane, examples include the gas-permeable membrane formed by hydrothermal synthesis on a ceramic membrane which is the support layer and a thin membrane formed by chemical vapor deposition (CVD).

[Shape of gas-permeable membrane]

The gas-permeable membrane is preferably a flat membrane shape or a hollow fiber shape.

In the case that the gas-permeable membrane is the flat membrane shape, examples include a pleated type, a plate-and-frame type, and a spiral type. A cooling membrane can be also the flat membrane shape or the hollow fiber membrane, and in the case of the flat membrane shape, it can be the pleated type (flat membrane pleated shape), the plate-and-frame type, or the spiral type.

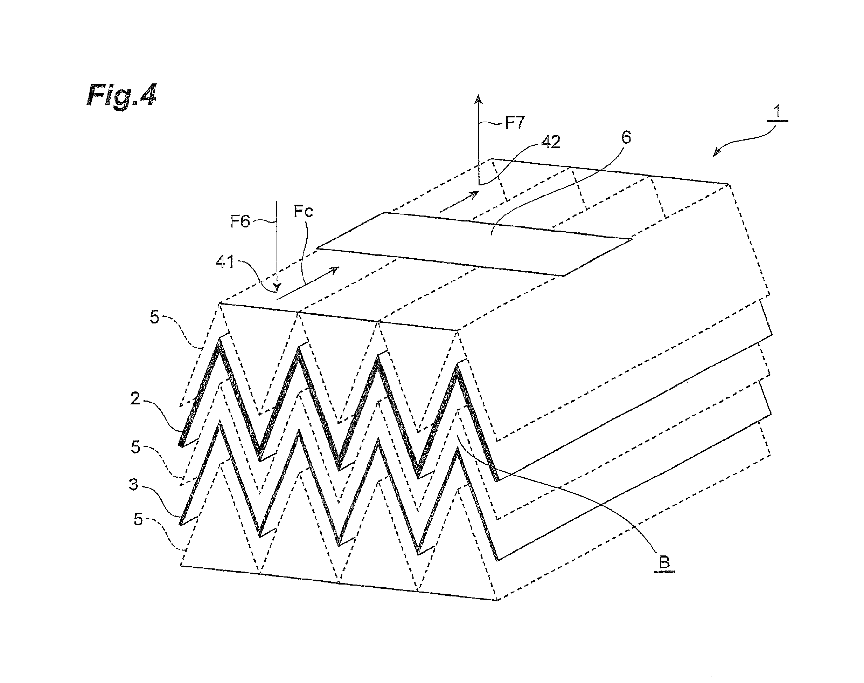

The pleated type (flat membrane pleated shape) is a structure in which the flat membrane is repeatedly folded in a bellows shape as illustrated in Figure 4. Figure 4 is a schematic diagram, there is a curvature at a fold portion, and a size of the curvature is changed by a folding pressure. In order to manufacture the pleated type, generally, a pleating machine is used. For pleats, there are a box shape structure in which the pleats are piled up in a box shape and a cylindrical structure. An example of the cylindrical structure include a structure in which individual pleats are wound around a core rod in a spiral shape.

The plate-and-frame type is a structure in which membranes are piled up sheet by sheet.

The spiral type is a structure in which a flat membrane in an envelope shape is wound by connecting an entrance of an envelope to the core rod.

The pleated type is preferable since a membrane cartridge is easy to prepare. In the case of the hollow fiber, there are the case of making the raw water flow to the inner side of the hollow fiber and the case of making the raw water flow to the outer side of the hollow fiber.

Here, the membrane cartridge is composed of the gas-permeable membrane, the cooling membrane, a reinforcing frame, and the like, and is mounted inside a membrane module.

In the method of the present embodiment, the raw water is made to flow along one surface of the gas-permeable membrane, and the vapor is permeated through the gas-permeable membrane. By making the raw water flow, evaporation latent heat can be supplied by sensible heat of the raw water, and it is possible to control a vapor generation amount, temperature and a vapor partial pressure.

The temperature of the raw water to be made to flow can be set at 1°C or higher and 100°C or lower. More preferably, it is 50°C or higher and 100°C or lower. By attaining this temperature range, the purified water can be efficiently obtained.

Also, in the method of the present embodiment, the vapor permeated through the gas-permeable membrane is condensed and the purified water is manufactured. As a method of condensing the vapor, there is cooling or pressurizing.

In the method of the present embodiment, it is preferable to make air flow along the other surface of the gas-permeable membrane. It is because that, by making the air flow along the other surface of the gas-permeable membrane on the opposite side of the surface of the gas-permeable membrane where the raw water flows, the vapor can be permeated more efficiently. Since the vapor permeation rate of the gas-permeable membrane depends on the partial pressure difference of the vapor on the raw water side and the opposite side (called a purified water side, hereinafter), by making the air flow, the partial pressure of the vapor on the purified water side is lowered, and the purified water can be stably and efficiently manufactured.

Also, a flowing direction of the raw water and a flowing direction of the air may be the same direction or the opposite directions.

[Air]

In the present embodiment, a temperature, a pressure and a composition of the air are not limited in particular.

[Temperature]

In the present embodiment, various heat sources can be utilized as a heat source for heating the raw water, however, from a viewpoint of saving energy, it is preferable to utilize waste heat of a factory, a power plant, a heat engine, an incinerator, or the like or solar heat.

[Membrane module]

Hereinafter, the membrane module in which the gas-permeable membrane is incorporated and made into a module in the present embodiment will be described. In the present application, since individual fluids of the raw water, the purified water and a cooling medium (cooling water is preferable, but it may be a gas for cooling) are normally put in containers and used, a case is provided, however, in the case of being immersed in the seawater and used or the like, there is no need of putting the individual fluids in the containers (though they may be put in), and the case is thus not essential, and it may be used in contact with the fluids released to the individual membranes. In which case, it is preferable that the individual fluids are forcibly made to flow to the membrane (in this case, the membrane may stand still and the fluids may move, or the fluids may stand still and the membrane may move, or both of the fluids and the membrane may move.), and for that, there may be a mixer or a fluid jetting device near the membrane. The mixer or the fluid jetting device may be also adopted in the membrane module having the case. Hereinafter, descriptions will be given presupposing the presence of the case.

The membrane module of the present embodiment is the membrane module including the gas-permeable membrane, the cooling membrane, and the case that houses the gas-permeable membrane and the cooling membrane, a first space formed by the gas-permeable membrane and the case, a second space formed by the gas-permeable membrane and the cooling membrane, and a third space formed by the cooling membrane and the case are provided inside the case, the first space has at least a raw water supply port that supplies the raw water to the first space, and a raw water discharge port that discharges the raw water from the first space, the second space has at least one or more openings, and the third space has at least a cooling medium supply port that supplies the cooling medium to the third space, and a cooling medium discharge port that discharges the cooling medium from the third space.

The first space of the membrane module is formed by the gas-permeable membrane and the case, and has at least the raw water supply port that supplies the raw water to the first space, and the raw water discharge port that discharges the raw water from the first space. In the first space, the raw water supplied from the raw water supply port flows along the gas-permeable membrane, and is then discharged from the raw water discharge port to the outside. The first space may have a plurality of the raw water supply ports and raw water discharge ports, or may have other openings.

The second space of the membrane module is formed by the gas-permeable membrane and the cooling membrane, and has at least one or more openings. The vapor permeated through the gas-permeable membrane from the raw water is condensed in the second space, and is discharged from the opening that the second space has to the outside. Also, in the second space, all the vapor does not need to be condensed, and some vapor may not be condensed. Also, the second space may be formed by the gas-permeable membrane, the cooling membrane, and the case.

Also, it is preferable that the second space has two or more openings. Since the second space has two or more openings, the air can be made to flow along the surface of the gas-permeable membrane. Since the vapor can be efficiently permeated through the gas-permeable membrane by that, it is preferable.

Further, by having a spacer between the gas-permeable membrane and the cooling membrane, strengths of the gas-permeable membrane and the cooling membrane can be improved, and therefore it is preferable. Also, by selecting an appropriate spacer, a distance between the gas-permeable membrane and the cooling membrane, that is, a shape or volume of the second space, can be controlled and formed, and therefore it is preferable.

The third space of the membrane module is formed by the cooling membrane and the case, and has at least the cooling medium supply port that supplies the cooling medium to the third space, and the cooling medium discharge port that discharges the cooling medium from the third space. In the third space, the cooling medium supplied from the cooling medium supply port flows along the cooling membrane, and is discharged from the cooling medium discharge port. At the time, through the cooling membrane, the vapor existing in the second space can be cooled. That is, the vapor in the second space is condensed and turned to the water by being in contact with the cooling membrane. The third space may have a plurality of the cooling medium supply ports and cooling medium discharge ports, and may have other openings.

For the membrane module of the present embodiment, it is preferable that the raw water supply port, the raw water discharge port, the cooling medium supply port and the cooling medium discharge port are arranged such that the direction of the raw water flowing through the first space and the direction of the cooling medium flowing through the third space are opposite.

Since the membrane module of the present embodiment is a structure that the distance between the gas-permeable membrane and the cooling membrane is extremely short, the vapor can be efficiently condensed, and the entire device can be miniaturized.

In the present embodiment, the cooling membrane is a membrane which has a function of cooling and condensing the vapor permeated through the gas-permeable membrane. Specifically, examples are a polymer membrane, a metallic thin membrane, and an inorganic thin membrane. Also, it is preferably a nonporous membrane.

In the present embodiment, the spacer is used to keep individual membrane intervals of the gas-permeable membrane and the cooling membrane fixed, and examples include a net, the non-woven fabric, and a rod-like body. Among them, the net is preferable.

Also, in the present embodiment, the cooling medium is used for a purpose of cooling the vapor through the cooling membrane, and water, an aqueous solution, an organic solvent, or the like can be used. As the cooling medium, the purified water, the seawater, and the water are preferable.

Next, a purified water manufacturing device of the present embodiment will be described below.

The purified water manufacturing device of the present embodiment has the membrane module of the present embodiment, a raw water supplier, and a cooling medium supplier, the raw water supply port of the first space is connected to the raw water supplier, and the cooling medium supply port of the third space is connected to the cooling medium supplier.

By the raw water supplier, the raw water is supplied to the raw water supply port of the first space in the membrane module, and the raw water is discharged from the raw water discharge port. The raw water can be circulated and utilized. In the case of circulating and utilizing it, since an impurity concentration in the raw water becomes high, it is preferable to perform supply while appropriately supplying new raw water. Also, by the cooling medium supplier, the cooling medium is supplied to the cooling medium supply port of the third space in the membrane module, and the cooling medium is discharged from the cooling medium discharge port. The cooling medium can be circulated and utilized. In the case of circulating and utilizing it, it is preferable to circulate the cooling medium while keeping the temperature fixed.

Also, since condensing means is connected to the opening of the second space, the vapor is condensed more, and therefore it is preferable. As the condensing means, there are a heat exchanger, a cooler, a pressurizer, and the like.

As another purified water manufacturing device of the present embodiment, in the purified water manufacturing device having the membrane module including the gas-permeable membrane and the case that houses the gas-permeable membrane, and the vapor condensing means, the membrane module is the membrane module that, inside the case, has the first space formed by the gas-permeable membrane and the case, and a fourth space formed by the gas-permeable membrane and the case, the first space has at least the raw water supply port that supplies the raw water to the first space, and the raw water discharge port that discharges the raw water from the first space, and the fourth space has at least one or more openings, and the vapor condensing means is connected to the opening of the fourth space.

In the purified water manufacturing device, the vapor is not condensed by the cooling membrane, and the vapor is condensed by the condensing means connected to the fourth space. Examples of the condensing means are described above.

In the purified water manufacturing device, it is preferable that the fourth space has two or more openings. Since the air can be supplied from the opening(s) to the fourth space in the membrane module and the vapor can be efficiently permeated through the gas-permeable membrane, it is preferable. Then, the air containing the vapor is condensed by the condensing means connected to the different opening, and the purified water can be manufactured.

Also, in the purified water manufacturing device of the present embodiment, it is preferable to further include a temperature control unit that controls the temperature of the raw water, and a flow rate control unit that controls a flow rate of the raw water. Since the temperature and the flow rate of the raw water can be controlled, it is easy to perform management for manufacturing the water under optimum conditions.

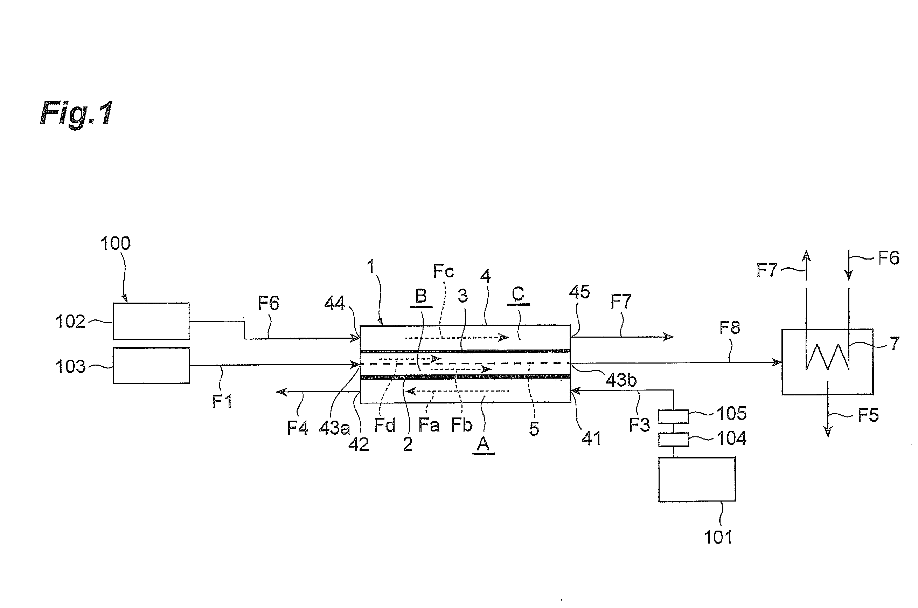

Hereinafter, with reference to the drawings, the individual embodiments will be described in detail further. First, the embodiment of the membrane module and the purified water manufacturing device will be described with reference to Figure 1. Figure 1 is a conceptual diagram of one embodiment of the purified water manufacturing device illustrating the membrane module at the center. A membrane module 1 includes a gas-permeable membrane 2, a cooling membrane 3, and a case 4. By the gas-permeable membrane 2 and the cooling membrane 3, inside the case 4, a first space A, a second space B, and a third space C are formed.

The first space A is formed by the case 4 and the gas-permeable membrane 2, the second space B is formed by the gas-permeable membrane 2, the cooling membrane 3 and the case 4, and the third space C is formed by the cooling membrane 3 and the case 4. Then, the first space A has a raw water supply port 41 and a raw water discharge port 42, the second space B has two openings 43a and 43b, and the third space C has a cooling medium supply port 44 and a cooling medium discharge port 45.

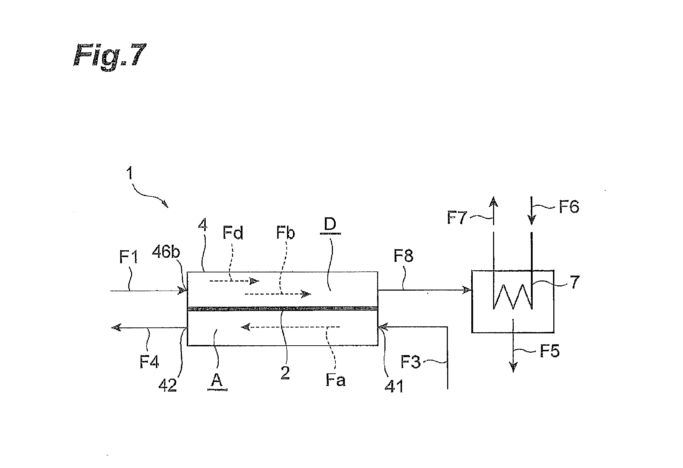

In the membrane module 1 illustrated in Figure 1, the raw water is supplied to the membrane module 1 (refer to F3 in Figure 1), is made to flow along the surface of the gas-permeable membrane 2 in the first space A (refer to Fa in Figure 1), and is discharged (refer to F4 in Figure 1). Then, the vapor permeated from the gas-permeable membrane 2 to the second space B is condensed by the cooling membrane 3, made to pass through between the gas-permeable membrane 2 and the cooling membrane 3 (refer to Fb in Figure 1), and is discharged from the membrane module 1 (refer to F8 in Figure 1). Also, to the second space B, the air is supplied from an air supplier 103 (refer to F1 in Figure 7), supplied to condensing means 7 together with the vapor permeated through the gas-permeable membrane 2, and condensed. The flow of the air (refer to Fd in Figure 7) is opposite to the flow of the raw water (refer to Fa in Figure 7).

Also, in the third space C, the cooling medium is supplied from the cooling medium supply port 44 (refer to F6 in Figure 1), is made to flow along the cooling membrane 3 (refer to Fc in Figure 1), and is discharged from the cooling medium discharge port 45 (refer to F7 in Figure 1).

Also, in the present embodiment, a spacer 5 is arranged so as to be clamped in order to keep an interval between the gas-permeable membrane 2 and the cooling membrane 3 fixed to apply a contrivance to improve shape stability, however, the spacer 5 may be omitted. Also, in the present embodiment, the air is supplied to the second space B in order to efficiently discharge the vapor, however, the supply of the air may be omitted.

In the form in Figure 1, since the gas-permeable membrane 2 and the cooling membrane 3 are close, the vapor permeated through the gas-permeable membrane 2 can be efficiently condensed at the cooling membrane 3, and therefore it is preferable. Also, the air may be forcibly made to flow between the gas-permeable membrane 2 and the cooling membrane 3. Also, in the membrane module in Figure 1, the flowing direction of the raw water (refer to F3 and F4 in Figure 1) and the flowing direction of the cooling medium (refer to F6 and F7 in Figure 1) are opposite.

Also, a purified water manufacturing device 100 illustrated in Figure 1 includes the above-described membrane module 1, a raw water supplier 101, a cooling medium supplier 102, an air supplier 103, and condensing means 7. The raw water supply port 41 of the first space A in the membrane module 1 is connected to the raw water supplier 101, the cooling medium supply port 44 of the third space C is connected to the cooling medium supplier 102, one opening 43a of the second space B is connected to the air supplier 103, and the other opening 43b is connected to the vapor condensing means 7. Also, the purified water manufacturing device 100 includes a temperature control unit 104 that controls the temperature of the raw water, and a flow rate control unit 105 that controls the flow rate of the raw water.

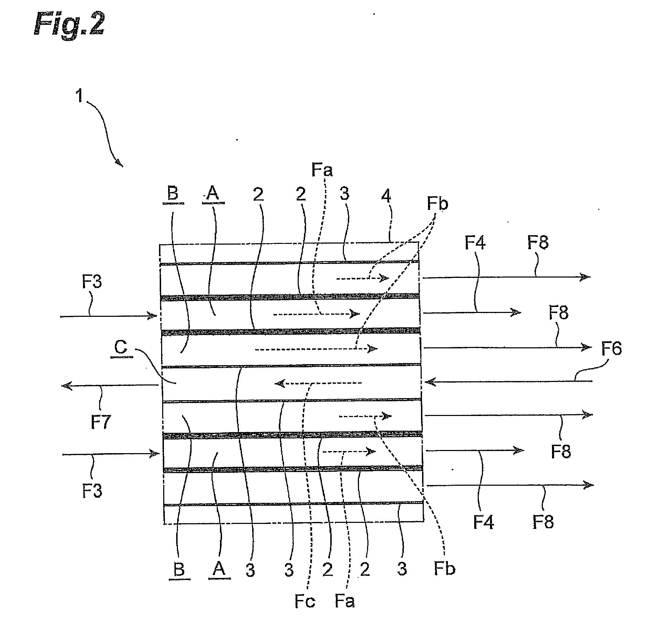

Figure 2 is a conceptual diagram according to another embodiment of the membrane module of the present embodiment. The membrane module 1 in Figure 2 is the membrane module 1 stacked in the order of the cooling membrane 3, the gas-permeable membrane 2, the gas-permeable membrane 2, the cooling membrane 3, the cooling membrane 3, the gas-permeable membrane 2, the gas-permeable membrane 2, and the cooling membrane 3. By stacking the gas-permeable membrane 2 and the cooling membrane 3 in the order, the membrane module 1 repeatedly stacked in the order of the first space A, the second space B, the third space C and the second space B is formed. This form is a part of the plate-and-frame type membrane module or a part of the pleated type membrane module, a surface area of the gas-permeable membrane increases, and therefore it is preferable. The number of the stacks may be three sets or more.

In the membrane module in Figure 2, in the space formed by the gas-permeable membrane 2 and the gas-permeable membrane 2, the raw water is supplied and discharged (refer to F3 and F4 in Figure 2). Then, in the space formed by the cooling membrane 3 and the cooling membrane 3, the cooling medium is supplied and discharged (F6 and F7 in Figure 2), and from the space formed by the gas-permeable membrane 2 and the cooling membrane 3, the condensed water is obtained (refer to F8 in Figure 2). The air can be supplied to the space formed by the gas-permeable membrane 2 and the cooling membrane 3 in the membrane module 1 in Figure 2 as well.

Also, as a variation of the membrane module 1 illustrated in Figure 2, for instance, by connecting the same membrane illustrated in Figure 2 in a cylindrical shape, the membrane module of a hollow fiber membrane type can be attained as well.

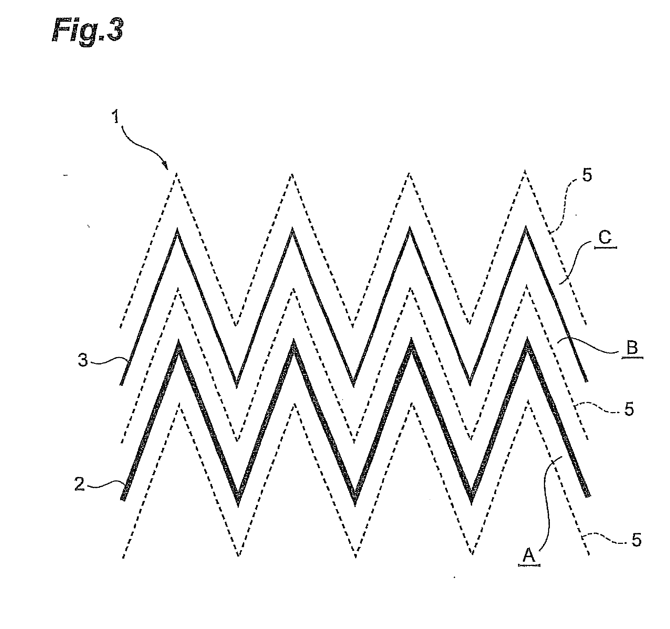

Figure 3 is a conceptual diagram illustrating one example of a pleated molding incorporated in the membrane module 1 illustrated in Figure 1. The pleated molding illustrated in Figure 3 is manufactured by being stacked in the order of the spacer 5, the gas-permeable membrane 2, the spacer 5, the cooling membrane 3, and the spacer 5, and processed in a pleated shape. The spacer 5 is used between the individual membranes for the purpose of keeping the distance between the individual membranes fixed. This form is preferable in that volume efficiency becomes high since a large membrane area can be held in a limited space.

Figure 4 is another embodiment of the membrane module using the pleated molding in Figure 3. Here, in the pleated molding, a direction along a fold of pleats is defined as a length of the pleated molding, a direction perpendicular to the fold of the pleats, which is perpendicular to a length direction, is defined as a width of the pleated molding, and a direction perpendicular to the length and the width is defined as a height of the pleated molding.

In the membrane module 1 illustrated in Figure 4, end faces of the pleated molding are both sealed except for the second space B of the gas-permeable membrane 2 and the cooling membrane 3. Then, on an upper surface of the pleated molding in Figure 4, a partition part 6 extending in a width direction is provided. Also, the partition part 6 may be provided not only on the upper surface of the pleated molding but also on a lower surface.

When the raw water is supplied from the raw water supply port 41 to the membrane module 1 (refer to F6 in Figure 4), the raw water flows along the fold of the pleated molding toward the length direction, and is discharged from the raw water discharge port 42 (refer to F7 in Figure 4). In the meantime, when the cooling medium is supplied from the cooling medium supply port, the cooling medium flows along the fold of the pleated molding toward the length direction, and is discharged from the cooling medium discharge port. The supplied raw water is turned to the vapor, permeated through the gas-permeable membrane 2, cooled at the cooling membrane 3, turned to the water, and discharged from between the gas-permeable membrane 2 and the cooling membrane 3. When the membrane module 1 has the partition part 6, the raw water or the cooling medium flows along the surface of the gas-permeable membrane 2, the efficiency improves, and therefore it is preferable.

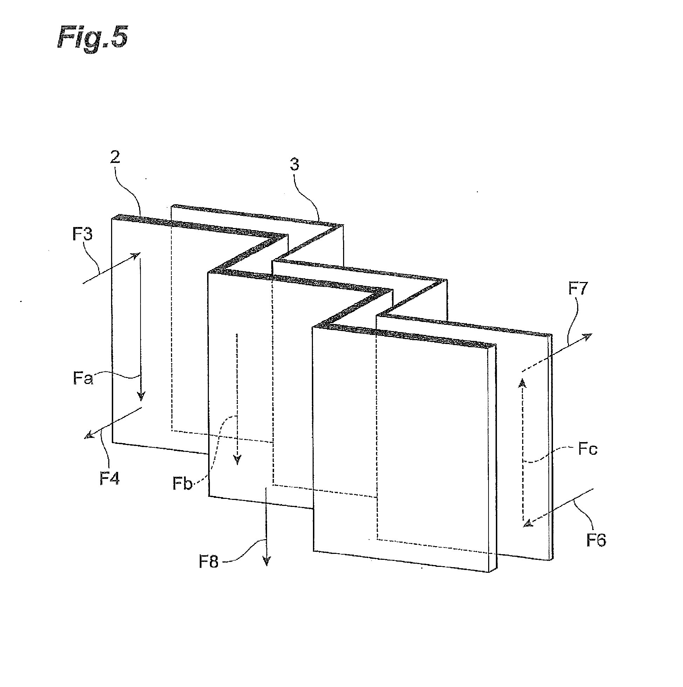

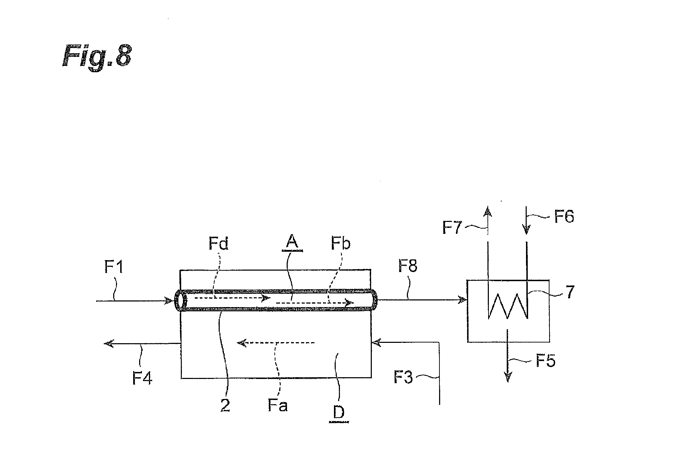

Figure 5 is a schematic diagram of the flows of the raw water, the cooling medium and the condensed water. The raw water flows from F3 along the surface of the gas-permeable membrane 2 (refer to Fa in Figure 8), and is discharged from F4. Also, F3, Fa, and F4 are on the front side of the gas-permeable membrane 2 in Figure 5. In the meantime, the cooling medium flows from F6 along the surface of the cooling membrane 3 (refer to Fc in Figure 8) and is discharged from F7. Also, F6, Fc, and F7 are on the back side of the cooling membrane 3 in Figure 5. Then, the vapor permeated through the gas-permeable membrane 2 is condensed at the cooling membrane 3, and is discharged from F8. In the membrane module 1 illustrated in Figure 5, the flowing direction of the raw water (refer to Fa in Figure 8) and the flowing direction of the cooling medium (refer to Fc in Figure 8) are the opposite directions.

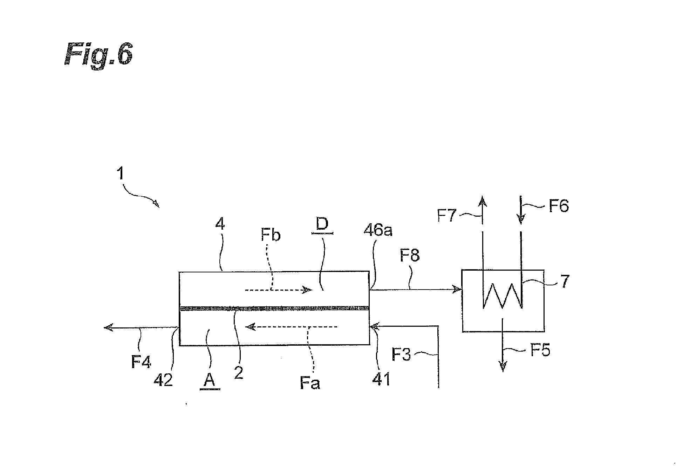

Figure 6 is a conceptual diagram of another embodiment of the membrane module of the present embodiment. By the gas-permeable membrane 2, the first space A and a fourth space D are formed inside the case 4, and one opening 46a of the first space A and the condensing means 7 are connected. In the membrane module 1 in Figure 6, the raw water is supplied to the membrane module 1 (refer to F3 in Figure 6), made to flow along the surface of the gas-permeable membrane 2 in the first space A, and discharged (refer to F4 in Figure 6). Then, the vapor permeated from the gas-permeable membrane 2 to the fourth space D (refer to Fb in Figure 6) is sent into the condensing means 7 (refer to F8 in Figure 6), and condensed by the condensing means 7 (refer to F5 in Figure 6), and the water is manufactured. In Figure 6, the condensing means 7 is connected with the opening 46a of the fourth space D.

Figure 7 is another conceptual diagram of one embodiment of the membrane module of the present embodiment. The membrane module 1 according to this embodiment is a variation of the membrane module 1 illustrated in Figure 6, and in addition to the components of the membrane module 1 illustrated in Figure 6, another opening 46b is provided in the fourth space D, the air is supplied from the opening 46b (refer to F1 in Figure 7), supplied to the condensing means 7 together with the vapor permeated through the gas-permeable membrane 2, and condensed. When the membrane module 1 in Figure 7 is used, the vapor can be efficiently permeated from the gas-permeable membrane 2. In the case of using the membrane module 1 illustrated in Figure 7, the flowing direction of the raw water (refer to Fa in Figure 7) and the flowing direction of the air (refer to Fd in Figure 7) are the opposite directions (opposite) across the gas-permeable membrane 2.

Figure 8 is a conceptual diagram of one embodiment of the hollow fiber type membrane module. In Figure 8, the inside of the case 4 of the membrane module 1 is divided into the outer side and the inner side of the gas-permeable membrane 2 in the hollow fiber shape. The gas-permeable membrane 2 is formed on an outer side surface or an inner side surface of the hollow fiber. Then, to the inner side of the gas-permeable membrane 2 in the hollow fiber shape, the raw water is supplied and discharged. Also, on the contrary, to the outer side of the hollow fiber, the raw water may be supplied and discharged. The vapor permeated from the gas-permeable membrane 2 in the hollow fiber shape is discharged together with the air supplied to the fourth space D. Then, by the condensing means 7, the vapor is condensed and the water is manufactured. Also, in Figures 7 and 8, as the condensing means 7, instead of the cooler, the cooling membrane in the hollow fiber shape can be used as the condensing means 7 as well.

## Examples

[Example 1]

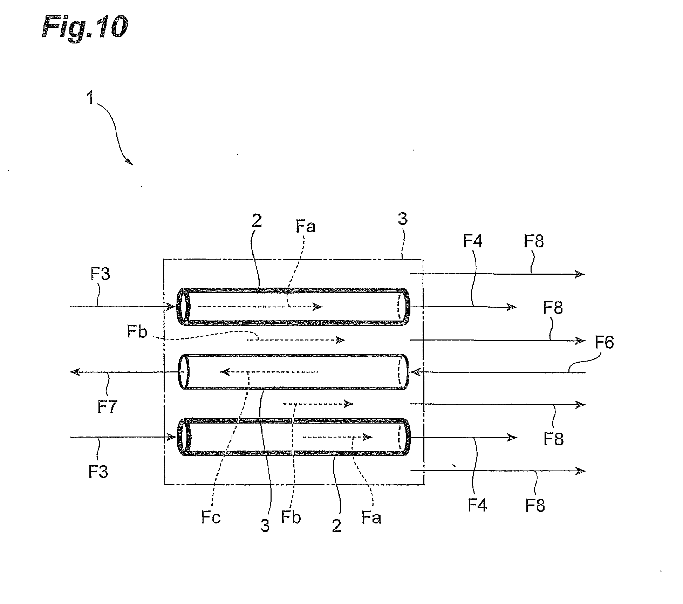

The gas-permeable membrane was manufactured by coating Teflon(R) AF-1600 (made by DuPont) to a polyethersulfone hollow fiber microporous membrane whose outer diameter is 1 mm and inner diameter is 0.7 mm. The oxygen permeation rate was 1200 GPU, it was the oxygen permeation rate/nitrogen permeation rate ratio = 2.3, and the vapor permeation rate was 5400 GPU. The water absorption rate of the AF-1600 membrane was 0.01% or lower, and a contact angle with the water was 104°. The water absorption rate was measured under the condition that the sample was immersed in the water at 23°C for 24 hours according to ASTM570. The contact angle with the water was measured using a contact angle measuring device (made by Kyowa Interface Science, CA-X150 type contact angle meter) after putting a droplet of deionized water on a surface of the sample and leaving it for one minute at 23°C. The hollow fibers were bundled to manufacture four pieces of membrane module 11 of 10 m², and the membrane module 11 of the total of 40 m² (refer to Figure 10) was assembled. The membrane module 11 includes a plurality of the gas-permeable membranes 2 composed of the hollow fiber membranes, a plurality of the cooling membranes 3, and the case 4 that houses the gas-permeable membranes 2 and the cooling membranes 3.

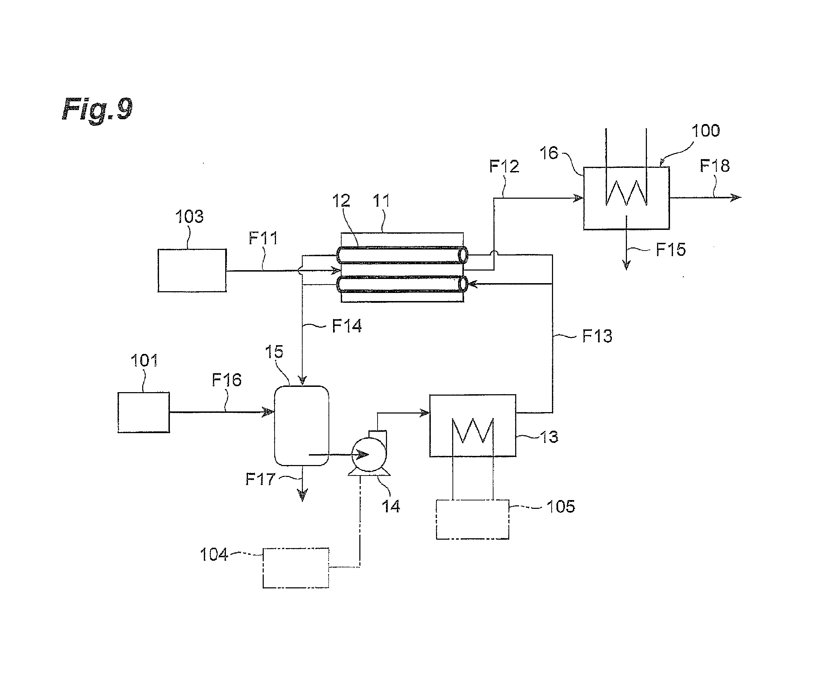

Using this membrane module 11, an experiment was conducted in the purified water manufacturing device 100 illustrated in Figure 9. In the purified water manufacturing device 100 in Figure 9, the air supplier 103 is driven, the air is supplied from F11 to the membrane module 11 and is discharged from F12, and the vapor is condensed in a cooler 16. The condensed water is discharged from F15, and the air is discharged from F18. Also, the raw water supplier 101 is driven, the seawater (one example of the raw water) is supplied from F16 to a circulation tank 15 and made to pass through a circulation pump 14, and the seawater is heated in a heater 13. Thereafter, the seawater is supplied through F13 to the membrane module 11, and the seawater discharged from F14 is returned to the circulation tank 15 again. The seawater can be blown down from F17. Also, the purified water manufacturing device 100 includes the flow rate control unit 104 that controls the flow rate of the seawater by controlling drive of the circulation pump 14, and the temperature control unit 105 that controls the temperature of the seawater by controlling the temperature of the heater 13.

The seawater supplied to the circulation tank 15 was at 20°C and at the flow rate of 3.2 L/min, an electric capacity of the heater 13 was turned to 83 kW, and the seawater was heated. The heated seawater was at 89°C and at the flow rate of 43 L/min at the raw water supply port of the membrane module 11, and was at 69.2°C and at the flow rate of 39.8 L/min at the raw water discharge port of the membrane module 11. Also, the air supplied from F11 to the membrane module 11 was at the flow rate of 6.3 Nm$^3$/min.

As a result of operating the purified water manufacturing device 100 in Figure 9 under the above-described operating conditions, the water (purified water) of about 3L/min was obtained. The salt concentration of the purified water was 0.01 wt% or lower. There was no contamination of the membrane by the impurities or the like.

[Example 2]

The gas-permeable membrane was manufactured by coating Teflon(R) AF-1600 to a polyolefin-based microporous membrane. Oxygen permeability was 1300 GPU, it was the oxygen permeation rate/nitrogen permeation rate ratio = 2.3, and the vapor permeation rate was 5900 GPU. The water absorption rate of the AF-1600 membrane was 0.01% or lower, and a contact angle with the water was 104°. The water absorption rate was measured under the conditions that the sample was immersed in the water at 23°C for 24 hours according to ASTM570. The contact angle with the water was measured using the contact angle measuring device (made by Kyowa Interface Science, CA-X150 type contact angle meter) after putting the droplet of the deionized water on the surface of the sample and leaving it for one minute at 23°C. A plain-woven net of 500 denier and 10 mesh was turned to the spacer, the gas-permeable membrane was held by the spacer and processed into pleats. Four pieces of the membrane module of 10 m$^2$ were manufactured, and the purified water manufacturing device of the total of 40 m$^2$ was assembled. When execution was performed under the conditions similar to Example 1 except that the membrane module 11 in Figure 9 (refer to Figure 10) was turned to the membrane module 1 in Figure 7, the water (condensed water) of about 3 L/min was obtained. The salt concentration of the purified water was 0.01 wt% or lower.

**Industrial Applicability**

The present invention can be utilized in manufacturing the purified water from the seawater.

**Reference Signs List**

1 ... Membrane module, 2 ... Gas-permeable membrane, 3 ... Cooling membrane, 4 ... Case, 5 ... Spacer, 6 ... Partition part, 7 ... Condensing means, 11 ... Membrane module, 12 ... Gas-permeable membrane, 13 ... Heater, 14 ... Circulation pump, 15 ... Circulation tank, 16 ... Cooler, 41 ... Raw water supply port, 42 ... Raw water discharge port, 43a, 43b, 46a, 46b ... Opening, 100 ... Purified water manufacturing device, 101 ... Raw water supplier, 103 ... Cooling medium supplier, 104 ... Flow rate control unit, 105 ... Temperature control unit, A ... First space, B ... Second space, C ... Third space, D ... Fourth space.

**Claims**

1. A method that makes raw water flow along one surface of a gas-permeable membrane, condenses vapor permeated through the gas-permeable membrane, and obtains purified water.

2. The method according to claim 1, wherein air is made to flow along another surface of the gas-permeable membrane.

3. The method according to claim 1 or 2, wherein the vapor is condensed by cooling.

4. The method according to any one of claims 1 to 3, wherein a vapor permeation rate of the gas-permeable membrane is equal to or higher than 10 GPU and is equal to or lower than 1000000 GPU.

5. The method according to any one of claims 1 to 4, wherein the raw water is seawater.

6. The method according to any one of claims 1 to 5, wherein a temperature of the raw water is equal to or higher than 1°C and is equal to or lower than 100°C.

7. The method according to any one of claims 1 to 6, wherein in a membrane module, a flowing direction of the raw water and a flowing direction of a cooling medium are opposite,
the membrane module comprising the gas-permeable membrane, a cooling membrane, and a case that houses the gas-permeable membrane and the cooling membrane,
wherein
a first space formed by the gas-permeable membrane and the case, a second space formed by the gas-permeable membrane and the cooling membrane, and a third space formed by the cooling membrane and the case are provided inside the case,
the first space has at least a raw water supply port that supplies the raw water to the first space, and a raw water discharge port that discharges the raw water from the first space,
the second space has at least one or more openings, and
the third space has at least a cooling medium supply port that supplies the cooling medium to the third space, and a cooling medium discharge port that discharges the cooling medium from the third space.

8. A membrane module comprising:

a gas-permeable membrane; and
a cooling membrane,
wherein raw water flows along one surface of the gas-permeable membrane.

9. The membrane module according to claim 8, wherein a cooling medium flows along one surface of the cooling membrane.

10. The membrane module according to claim 8 or 9, wherein a flowing direction of the raw water and a flowing direction of the cooling medium are opposite.

11. The membrane module according to any one of claims 8 to 10, further comprising
a case that houses the gas-permeable membrane and the cooling membrane,
wherein
a first space formed by the gas-permeable membrane and the case, a second space formed by the gas-permeable membrane and the cooling membrane, and a third space formed by the cooling membrane and the case are provided inside the case,
the first space has at least a raw water supply port that supplies the raw water to the first space, and a raw water discharge port that discharges the raw water from the first space,
the second space has at least one or more openings, and
the third space has at least a cooling medium supply port that supplies the cooling medium to the third space, and a cooling medium discharge port that discharges the cooling medium from the third space.

12. The membrane module according to claim 11, wherein the second space has two or more of the openings.

13. The membrane module according to claim 11 or 12, comprising
a spacer between the gas-permeable membrane and the cooling membrane.

14. The membrane module according to any one of claims 11 to 13, wherein the gas-permeable membrane and the cooling membrane are in a flat membrane pleated shape.

15. The membrane module according to any one of claims 11 to 14, wherein the raw water supply port, the raw water discharge port, the cooling medium supply port, and the cooling medium discharge port are arranged so that a direction of the raw water flowing through the first space and a direction of the cooling medium flowing through the third space are opposite.

16. The membrane module according to any one of claims 11 to 15, comprising
a plurality of the gas-permeable membranes and the cooling membranes,
wherein
the first space is formed between the gas-permeable membranes adjacent to each other,

the second space is formed between the gas-permeable membrane and the cooling membrane that are adjacent, the third space is formed between the cooling membranes adjacent to each other, and stacking is repeatedly performed in an order of the first space, the second space, the third space, and the second space.

17. A purified water manufacturing device, comprising:

   the membrane module according to any one of claims 11 to 16;
   a raw water supplier; and
   a cooling medium supplier,
   wherein
   the raw water supply port of the first space is connected to the raw water supplier, and
   the cooling medium supply port of the third space is connected to the cooling medium supplier.

18. The purified water manufacturing device according to claim 17, wherein vapor condensing means is connected to the openings of the second space.

19. A purified water manufacturing device comprising:

   a membrane module including a gas-permeable membrane and a case that houses the gas-permeable membrane; and
   vapor condensing means,
   wherein
   the membrane module is the membrane module that, inside the case, has a first space formed by the gas-permeable membrane and the case, and a fourth space formed by the gas-permeable membrane and the case,
   the first space has at least a raw water supply port that supplies raw water to the first space, and a raw water discharge port that discharges the raw water from the first space, and
   the fourth space has at least one or more openings, and
   the vapor condensing means is connected to the opening of the fourth space.

20. The purified water manufacturing device according to claim 18 or 19, wherein the vapor condensing means is a heat exchanger or a cooler.

21. The purified water manufacturing device according to any one of claims 17 to 20, further comprising:

   a temperature control unit that controls a temperature of the raw water; and
   a flow rate control unit that controls a flow rate of the raw water.

Fig.1

# Fig.2

## Fig.3

Fig.4

EP 2 857 358 A1

## Fig.5

**Fig.6**

Fig.7

*Fig.8*

**Fig.9**

**Fig.10**

## INTERNATIONAL SEARCH REPORT

| International application No. |
|---|
| PCT/JP2012/063947 |

A. CLASSIFICATION OF SUBJECT MATTER
*C02F1/44*(2006.01)i, *B01D61/36*(2006.01)i, *B01D63/14*(2006.01)i

According to International Patent Classification (IPC) or to both national classification and IPC

B. FIELDS SEARCHED

Minimum documentation searched (classification system followed by classification symbols)
C02F1/44, B01D61/36, B01D63/14

Documentation searched other than minimum documentation to the extent that such documents are included in the fields searched
Jitsuyo Shinan Koho          1922-1996     Jitsuyo Shinan Toroku Koho     1996-2012
Kokai Jitsuyo Shinan Koho    1971-2012     Toroku Jitsuyo Shinan Koho     1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-159177 A (Mitsubishi Heavy Industries, Ltd.), 22 June 2006 (22.06.2006), claim 1; paragraphs [0049], [0050], [0054] to [0056]; fig. 4 (Family: none) | 1-3,6,19-21 |
| Y | same as the above | 4,5,18 |
| Y | JP 2003-506212 A (E.I. Du Pont De Nemours & Co.), 18 February 2003 (18.02.2003), claims; paragraphs [0022] to [0026], [0056] & US 2003/0209419 A1    & EP 1208066 A & EP 1588986 A1          & WO 2001/010784 A2 | 1-18 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 June, 2012 (25.06.12) | 03 July, 2012 (03.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

| International application No. |
| --- |
| PCT/JP2012/063947 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2012-500114 A  (Nederlandse Organisatie voor Toegepast-Natuurwetenschappelijk Onderzoek TNO),<br>05 January 2012 (05.01.2012),<br>claim 16; paragraphs [0013], [0019], [0027], [0040], [0041], [0043]; fig. 1(b), 3<br>& EP 2156880 A1        & EP 2331241 A<br>& WO 2010/021545 A1      & CA 2733039 A | 1-18 |
| Y | JP 2001-38155 A  (Toray Industries, Inc.),<br>13 February 2001 (13.02.2001),<br>paragraph [0028]<br>(Family: none) | 14 |
| A | JP 2-120698 A  (Nippon Atomic Industry Group Co., Ltd.),<br>08 May 1990 (08.05.1990),<br>page 2, upper right column, line 14 to lower right column, line 9<br>(Family: none) | 1-21 |

Form PCT/ISA/210 (continuation of second sheet) (July 2009)

## INTERNATIONAL SEARCH REPORT

International application No.

PCT/JP2012/063947

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The technical feature common to the invention of claim 1, the invention of claim 8, and the invention of claim 19 is a technique for "obtaining purified water by condensing water vapor having permeated through a gas permeable membrane".
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/063947

Continuation of Box No.III of continuation of first sheet(2)

However, the above-said technical feature cannot be considered to be a special technical feature, since the technical feature does not make a contribution over the prior art in the light of the contents disclosed in the document 1 (JP 2006-159177 A (Mitsubishi Heavy Industries, Ltd.), 22 June 2006 (22.06.2006), claim 1, paragraphs [0049], [0050], [0054] to [0056], fig. 4).
Further, there is no other same or corresponding special technical feature among these inventions.
The following three inventions (invention groups) are involved in claims.
(Invention 1) claim 1 and claims referring to claim 1
(Invention 2) claim 8 and claims referring to claim 8
(Invention 3) claim 19 and claims referring to claim 19

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI91143 B

- JP 2010162527 A